(19) Europäisches Patentamt
European Patent Office
Office européen des brevets

(11) **EP 4 664 406 A1**

(12) **EUROPEAN PATENT APPLICATION**

(43) Date of publication:
**17.12.2025 Bulletin 2025/51**

(21) Application number: **24182389.7**

(22) Date of filing: **14.06.2024**

(51) International Patent Classification (IPC):
**G06T 13/40** (2011.01)

(52) Cooperative Patent Classification (CPC):
**G06T 17/00; G06T 13/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Toyota Jidosha Kabushiki Kaisha**
**Toyota-shi, Aichi-Ken 471-8571 (JP)**
• **Technical University of Munich**
**80333 München (DE)**

(72) Inventors:
• **GARATTONI, Lorenzo**
**1140 BRUSSELS (BE)**

• **DAVOLI, Davide**
**1140 BRUSSELS (BE)**
• **TANG, Jiapeng**
**80333 MUNICH (DE)**
• **KIRSCHSTEIN, Tobias**
**80333 MUNICH (DE)**
• **NIESSNER, Matthias**
**80333 MUNICH (DE)**
• **SCHONEVELD, Liam**
**CHUO-KU, TOKYO, 103-0022 (JP)**

(74) Representative: **Cabinet Beau de Loménie**
**103, rue de Grenelle**
**75340 Paris Cedex 07 (FR)**

Remarks:
Amended claims in accordance with Rule 137(2) EPC.

(54) **METHOD AND DEVICE FOR CREATING A CONTROLLABLE AVATAR**

(57) A computer-implemented method for creating a controllable avatar of an animated subject from at least one image set (10) of the animated subject, the method comprising:
- initializing the controllable avatar;

- obtaining at least one subject image prior ($\hat{I}^{view}$) from a pre-trained image generation model (20);
learning parameters of the controllable avatar based on the at least one image set (10) and the at least one subject image prior ($\hat{I}^{view}$).

**FIG. 1**

EP 4 664 406 A1

**Description**

BACKGROUND OF THE INVENTION

1. Field of the invention

The present disclosure relates to the field of animation and reconstruction from images, and more particularly to a device and computer-implemented method for creating a controllable avatar of an animated subject.

2. Description of Related Art

Creating controllable avatars of animated subjects such as articulated objects, body portions, human or animal heads, etc. has been a longstanding challenge in computer vision and graphics. In particular, the ability to render photorealistic dynamic avatars from arbitrary viewpoints enables numerous applications in gaming, movie production, immersive telepresence, and augmented or virtual reality. For such applications, it is also crucial to be able to control the avatar, and for it to generalize well to novel poses and expressions.

Reconstructing a 3D representation able to jointly capture the appearance, geometry and dynamics of a subject, for instance a human head, represents a major challenge for high-fidelity avatar generation. The under-constrained nature of this reconstruction problem significantly complicates the task of achieving a representation that combines novel-view rendering photorealism with pose and expression controllability. Moreover, in the case of a human head, extreme expressions and facial details, like wrinkles, the mouth interior, and hair, are difficult to capture, and can produce visual artifacts easily noticed by humans. Similar difficulties, mutatis mutandis, arise for other types of subjects.

Recently, [REF. 1] has proposed a method achieving photorealistic 4D (i.e. three spatial dimensions plus time) reconstruction and plausible animation of an avatar from multi-view videos captured in a professional studio. However, this capturing setting is very demanding and such a rich input is often not available. In particular, this method encounters challenges in reconstructing 4D avatars from monocular recordings from commodity cameras, such as portrait videos captured by a smartphone. This is indeed an under-constrained problem, as there are few or even no observations that can serve as constraints for novel view supervision. Consequently, such methods struggle to extrapolate to hold-out views far from the input views when using only a monocular RGB video as an input. As regards human heads, this issue becomes even more pronounced when applied to the sparse observations of short videos with limited head rotations and expressions captured, leading to difficulties in animating unseen poses and facial expressions. Therefore, there is a need for a new device and method for creating a controllable avatar of an animated subject.

The following references disclose various methods relating to the field of reconstruction from images, animation or human modeling:

[REF. 1] Shenhan Qian, Tobias Kirschstein, Liam Schoneveld, Davide Davoli, Simon Giebenhain, and Matthias Nießner. GaussianAvatars: Photorealistic head avatars with rigged 3D gaussians. arXiv preprint arXiv:2312.02069 (2023).

[REF. 2] Bernhard Kerbl, Georgios Kopanas, Thomas Leimkühler, and George Drettakis. 3D Gaussian splatting for real-time radiance field rendering. ACM Transactions on Graphics (ToG), 42(4):1-14, 2023.

[REF. 3] Ben Mildenhall, Pratul P Srinivasan, Matthew Tancik, Jonathan T Barron, Ravi Ramamoorthi, and Ren Ng. NeRF: Representing scenes as neural radiance fields for view synthesis. Communications of the ACM, 65(1):99-106, 2021.

[REF. 4] Tianye Li, Timo Bolkart, Michael. J. Black, Hao Li, and Javier Romero. Learning a model of facial shape and expression from 4D scans. ACM Transactions on Graphics, (Proc. SIGGRAPH Asia), 36(6):194:1-194:17, 2017.

[REF. 5] Justus Thies, Michael Zollhofer, Marc Stamminger, Christian Theobalt, and Matthias Nießner. Face2face: Real-time face capture and reenactment of rgb videos. In Proceedings of the IEEE conference on computer vision and pattern recognition, pages 2387-2395, 2016.

[REF. 6] Nataniel Ruiz, Yuanzhen Li, Varun Jampani, Yael Pritch, Michael Rubinstein, and Kfir Aberman. 2023. Dreambooth: Fine tuning text-to-image diffusion models for subject-driven generation. In Proceedings of the IEEE/CVF Conference on Computer Vision and Pattern Recognition. 22500-22510.

[REF. 7] Lvmin Zhang, Anyi Rao, and Maneesh Agrawala. 2023. Adding conditional control to text-to-image diffusion models. In Proceedings of the IEEE/CVF International Conference on Computer Vision. 3836-3847.

[REF. 8] Ben Poole, Ajay Jain, Jonathan T Barron, and Ben Mildenhall. 2022. Dreamfusion: Text-to-3d using 2d diffusion. arXiv preprint arXiv:2209.14988 (2022).

[REF. 9] Jiaming Song, Chenlin Meng, and Stefano Ermon. 2020a. Denoising diffusion implicit models. arXiv preprint arXiv:2010.02502 (2020).

[REF. 10] Robin Rombach, Andreas Blattmann, Dominik Lorenz, Patrick Esser, and Björn Ommer. 2021. High-Resolution Image Synthesis with Latent Diffusion Models. arXiv:2112.10752 [cs.CV]

[REF. 11] Wojciech Zielonka, Timo Bolkart, and Justus Thies. 2022. Towards metrical reconstruction of human faces. In European Conference on Computer Vision. Springer, 250-269.

[REF. 12] Diederik P Kingma and Jimmy Ba. Adam: A method for stochastic optimization. arXiv preprint arXiv: 1412.6980, 2014.

[REF. 13] Tobias Kirschstein, Shenhan Qian, Simon Giebenhain, TimWalter, and Matthias Nießner. 2023. Nersemble: Multi-view radiance field reconstruction of human heads. ACM Transactions on Graphics (TOG) 42, 4 (2023), 1-14.

SUMMARY

In this respect, the present disclosure relates to a computer-implemented method for creating a controllable avatar of an animated subject from at least one image set of the animated subject, the method comprising:

- initializing the controllable avatar;
- obtaining at least one subject image prior from a pre-trained image generation model;
- learning parameters of the controllable avatar based on the at least one image set and the at least one subject image prior.

For conciseness, this method is referred to, hereinafter, as the creating method.

As used herein, for conciseness and unless the context indicates otherwise, "a", "an", and "the" (e.g. image set) are intended to refer to "at least one" or "each" (e.g. image set) and to include plural forms as well. Conversely, generic uses of the plural form may include singular elements.

An avatar may be a digital replication of the subject's appearance. The avatar being controllable means that parameters of the avatar can be changed in order to change the avatar's appearance, as will be detailed hereinafter. The avatar may be a three-dimensional avatar. The avatar being controllable over time may be seen as a fourth dimension of the avatar.

The image set may be a single-view image set or a multi-view image set. A multi-view image set may be an image set in which each element or time step corresponds to a plurality of images of the subject simultaneously taken from a plurality of viewpoints, respectively. Conversely, a single-view image set, also referred to as a monocular image set, may be an image set in which each element or time step corresponds to a single image, the consecutive images being taken from the same viewpoint if the camera is fixed or from various respective viewpoints if the camera is moving.

The image set may comprise a plurality of successive frames of a video; the image set may be a video. Alternatively, the image set may comprise a plurality of non-successive frames of a video, e.g. selected irregularly or regularly at a given sampling frequency (e.g. every third frame of the video). Yet alternatively, the image set may comprise one or more static images, e.g. photographs. Using frames from a video enables to ensure visual consistency within the image set, both as regards the subject (e.g. haircut, accessories and the like) and as regards the context (lighting, environment, etc.).

The image set may be acquired, e.g. through an image acquisition module such as a camera, or retrieved as an already acquired image set from a database, e.g. a local or distant server or the like.

Initializing the controllable avatar may be carried out in any desired manner to provide a controllable avatar to optimize. For instance, initializing may be carried out e.g., following [REF. 1], by associating geometric primitives to a parametric morphable model of the animated subject. Geometric primitives are a representation of local visual information of the avatar. The geometric primitives contain the necessary information to enable, possibly after processing such as image rendering, displaying the avatar. A geometric primitive may be defined by parameters such as a position, an orientation, a shape, a size or scale, a color, an opacity, etc. Examples of geometric primitives include a point cloud, 3D Gaussians ([REF. 2]), other three-dimension probability distributions or even more expressive geometric primitives which may, for instance, bend or stretch. Expressiveness qualifies the ability of the geometric primitive to convey the appearance of the subject.

Besides, the model of the animated subject is parametric and morphable: the model is defined by parameters and changing the parameters of the model and its shape, including pose and expression, enables to control the avatar. In the following, unless the context indicates otherwise, the "model" will refer to the parametric and morphable model of the animated subject. The model may represent a global shape of the animated subject.

For instance, the model may be a surface model in three-dimensions. In these embodiments, each base element (e.g. cell of a mesh) of the model is two-dimensional and has a 3D position and orientation with respect to other elements of the model.

In associating a plurality of geometric primitives to the parametric morphable model, the geometric primitives are rigged to the model. Thus, the geometric primitives add visual information to the model which includes the shape information. In doing so, the geometric primitives together form a dynamic representation. Moreover, the model enables to efficiently and consistently animate the geometric primitives, which would otherwise be too difficult to control.

As mentioned above, learning or reconstructing parameters of the controllable avatar based on the image set only may be an under-constrained problem if the image set is sparse. In order to overcome this issue, the present creating method provides that the parameters of the controllable avatar are learnt not only based on the image set but also based on at least one subject image prior obtained from a pre-trained image generation model.

An image generation model is a model, e.g. a machine learning model, able to generate images based on a desired input, e.g. a text prompt and/or another image. This image generation model is pre-trained, i.e. trained prior to using it in the creating method. Any training method adapted to the type of image generation model may be considered.

In particular, the image generation model is configured to generate subject image priors, i.e. images that are used as priors in relation to a subject. As used generally in the art of machine learning, "prior" means that the image was generated based on some knowledge or assumptions about what a subject should look like and is used to complement the information of the image set to learn the controllable avatar, such knowledge or assumptions being contained in the image generation model. The image generation model is not necessarily configured to generate images of the very same subject as that of which an avatar is desired. The image generation model is however configured to generate images of a subject of the same type or category (e.g. class) as the desired subject, e.g. a human head when the controllable avatar aims to replicate a human head.

The learning updates values of the parameters to increase similarity between the controllable avatar and the animated subject. The learning may comprise a plurality of iterations.

The subject image priors enable to regularize the distribution of novel view and expression synthesis from the controllable avatar. These priors explicitly guide the controllable avatar (e.g. images rendered from the controllable avatar) towards the underlying latent manifold of realistic images, enhancing its fidelity and authenticity. Thus, by learning the parameters of the controllable avatar based on both the image set and the subject image priors, a more realistic controllable avatar can be obtained, with satisfactory generalization ability on unseen poses and expressions, even if the input image set of the animated subject is sparse.

Optionally, the method further comprises, prior to obtaining the at least one subject image prior, fine-tuning the image generation model to personalize it for the animated subject. Fine-tuning may comprise training the image generation model further to its pre-training. This fine-tuning provides a greater consistency between the image set and the subject image priors, and enables to improve the learning of the controllable avatar.

Optionally, the fine-tuning comprises fine-tuning the image generation model on the at least one image set. That is, the image set is used as a basis for further training the image generation model. Therefore, no further input or information on the animated subject is required. Thus, fine-tuning can be carried out efficiently.

Optionally, the fine-tuning comprises generating augmented data by the image generation model and fine-tuning the image generation model on the augmented data. Considering that the image set may be sparse, it is interesting to obtain further data for fine-tuning the image generation model. In this respect, the image generation model itself may generate additional data, also known as augmented data, on which the image generation model may then be fine-tuned. As will be detailed below, the generation of augmented data may take further inputs into account to complement what the image generation model alone would provide, thereby enabling to fine-tune the image generation model based on richer information.

Fine-tuning the image generation model on the image set and on the augmented data may be combined. Fine-tuning the image generation model on the augmented data enables to avoid a view bias issue which may occur when the image generation model is fine-tuned on the image set only, namely the image generation model tending to generate images mostly from the viewpoints of the image set, which may correspond to a limited subset of all possible viewing angles.

As the case may be, the image generation model fine-tuning may be performed first on the image set and then on the augmented data, in order to ensure that the image generation model is already somewhat fine-tuned when it is used to generate the augmented data. However, this two-stage fine-tuning strategy may also be carried out in the opposite order.

Optionally, the augmented data are generated by conditioning the image generation model based on three-dimensional information of the animated subject. The three-dimensional (3D) information may comprise at least one of a depth map (i.e. a map indicating the depth of points of the subject with respect to a reference point or plane), normal map (e.g. a map indicating the direction of vectors normal to local surfaces of the subject), landmarks (e.g. a map indicating the 2D/3D location of remarkable items such as, for a head: the nose, mouth, ears, eyes, etc. and the like, or portions thereof, an arrangement of which follows a known 3D pattern), etc. Conditioning the image generation model means that the image generation model is constrained by an additional input, referred to as a condition. Specifically, conditioning the image generation model based on the 3D information makes the image generation model take the 3D information into account when generating the augmented data. In doing so, the image generation model can produce more consistent data that match the subject's 3D information.

Optionally the three-dimensional information is obtained from the at least one image set. Thus, no further input or information on the animated subject is required, than what is already available for the creating method. The three-dimensional information may be obtained directly or indirectly from the at least one image set, e.g. based on the controllable avatar after initializing and/or any information derived from the at least one image set.

Optionally, the augmented data comprise at least one set of images, each set of images showing a reconstruction of the animated subject under a plurality of viewpoints. In other words, the augmented data may comprise multi-view images as defined above. In such embodiments, the augmented data enhances the controllable avatar's ability to generalize on unseen poses of the animated subject.

Optionally, the at least one subject image prior is used as pseudo-ground-truth for the learning. For instance, the learning may comprise rendering images from the controllable avatar and updating the parameters of the controllable avatar based on a comparison between the rendered images and the pseudo-ground-truth images formed by the subject image prior.

Optionally, obtaining at least one subject image prior comprises rendering at least one novel image from the controllable avatar and enhancing the at least one novel image by the image generation model. The novel image is an image that does not belong to the image set. In these embodiments, the image generation model takes an image as an input and is configured to provides an enhanced version of that image, thanks to its pre-training and, as the case may be, its fine-tuning. In doing so, the subject image prior, which may correspond to the enhanced novel image, enables to infuse more precise information about the subject for learning the controllable avatar.

Optionally, the at least one novel image shows a novel view of the animated subject having the same expression as in an image of the at least one image set. In other words, the novel image may show a new viewpoint of a known expression of the animated subject. This helps the controllable avatar generalize on new poses. The expression refers to the attitude of the animated subject, namely the relative positions of the portions of the subject which are animated relative to one another. For a human head, the expression may correspond to the facial expression. For a robot arm, the expression may correspond to the pose of the arm segments relative to one another.

Alternatively or in addition, the at least one novel image shows a novel expression of the animated subject as compared to the at least one image set. A novel expression is characterized by parameters of the controllable avatar which take values different from the values they implicitly have in the image set. The novel expression may be seen from any viewpoint (e.g. a viewpoint known in the image set or a new viewpoint), or even from multiple viewpoints. Taking account of novel images showing novel expressions increases animatability of the controllable avatar across poses and expressions.

The at least one novel image may comprise one or more images showing at least one novel view and/or one or more images showing at least one novel expression.

Optionally, the at least one novel image is generated by conditioning the image generation model based on three-dimensional information of the animated subject. Optionally, the three-dimensional information is obtained from the at least one image set. The same remarks as above, relating to the fine-tuning of the image generation model, apply mutatis mutandis.

Optionally, the at least one subject image prior is updated during the learning. Updated means that the subject image prior may be partly updated or even replaced by a newer version. The newer (partial or total) version is generally more accurate because the controllable avatar has been refined in-between, from a certain learning iteration to a subsequent learning iteration.

Optionally, the image generation model comprises a diffusion model and/or a text-to-image model. Diffusion models are machine learning models known per se in the art and generally take an input and generate a modified version of that input based on some conditioning. This may be carried out by adding some noise to the input and iteratively denoising the noised input based on the conditioning. Besides, text-to-image models are machine learning models known per se in the art and generally take a text prompt as an input and generate an image based on the text prompt. The image generation model may combine both approaches and may comprise a text-to-image diffusion model. However, other types of image generation models are encompassed, such as a generative adversarial network (GAN).

Optionally, the at least one image set is a monocular image set, optionally sampled from a monocular video.

The present disclosure further relates to a device for creating a controllable avatar of an animated subject from at least one image set of the animated subject, the device being configured to:

- initialize the controllable avatar;
- obtain at least one subject image prior from a pre-trained image generation model;
- learn parameters of the controllable avatar based on the at least one image set and the at least one subject image prior.

The device, referred to hereinafter as the creating device, may be configured to carry out the above-mentioned creating method, and may have part or all of the above-described features. The device may have the hardware structure of a computer. More generally, the device may comprise a processor configured to perform the above-recited steps. A memory may also be provided as the case may be.

The present disclosure is further directed to a system comprising the above-described creating device equipped with a video or image acquisition module to obtain the at least one image set. The video or image acquisition module may be a camera or the like, e.g. a monocular camera.

The present disclosure is further related to a computer program set including instructions for executing the steps of the above described creating method when said program is executed by at least one computer. This program set can use any programming language and take the form of source code, object code or a code intermediate between source code and object code, such as a partially compiled form, or any other desirable form.

The present disclosure is further related to a recording medium readable by at least one computer and having recorded thereon at least one computer program including instructions for executing the steps of the above described creating method. The recording medium can be any entity or device capable of storing the program. For example, the medium can include a mass memory device, such as hard drive. In general, mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks.

Alternatively, the recording medium can be an integrated circuit in which the program is incorporated, the circuit being adapted to execute the method in question or to be used in its execution.

## BRIEF DESCRIPTION OF THE DRAWINGS

Features, advantages, and technical and industrial significance of exemplary embodiments of the invention will be described below with reference to the accompanying drawings, in which like signs denote like elements, and wherein:

- Fig. 1 is a block diagram illustrating a creating method according to an embodiment;
- Fig. 2 is a block diagram illustrating fine-tuning an image generation model according to an embodiment;
- Fig. 3 shows example outputs of the creating method according to an embodiment and of a comparative method for a cross-reenactment task.

## DETAILED DESCRIPTION OF EMBODIMENTS

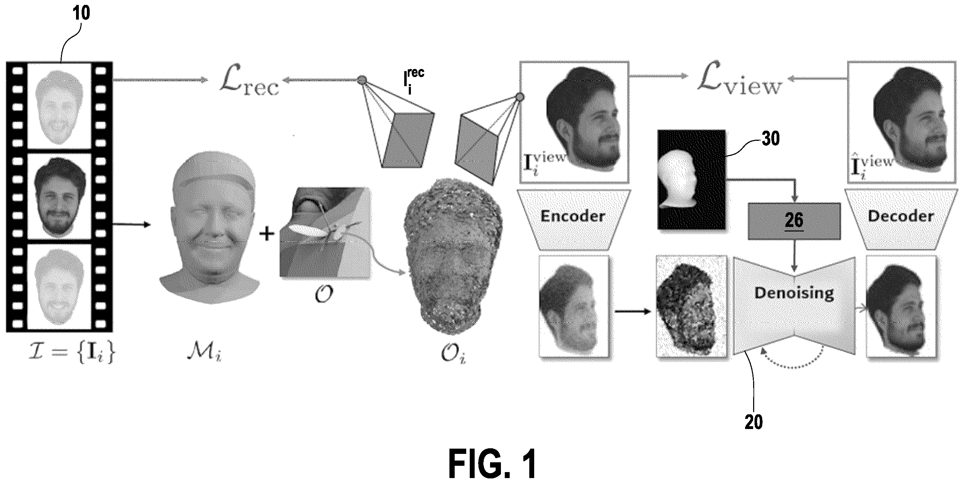

An embodiment of the creating method will be described with reference to Fig. 1. As stated above, the creating method is a computer-implemented method for creating a controllable avatar of an animated subject from at least one image set of the animated subject, the method comprising initializing the controllable avatar, obtaining at least one subject image prior from a pre-trained image generation model, and learning parameters of the controllable avatar based on the at least one image set and the at least one subject image prior.

While Fig. 1 will be described in terms of a method, the illustrated blocks may be regarded as corresponding functions of a creating device.

The embodiment shown in Fig. 1 is detailed with the animated subject being a human head. However, the principles explained herein also apply to other animated subjects, such as articulated (including flexible) objects, bodies, animals, plants, etc.

Besides, the embodiment shown in Fig. 1 is detailed with the image set being a monocular image set $I = \{I_i\}$, e.g. sampled from a monocular video. While a video may be helpful to effectively track a subject to obtain a model thereof while ensuring visual consistency among the successive images, the principles explained herein for the creating method *per se* do not require a video, and the image set may comprise images of a subject, the images being discontinuous in time and/or viewpoint. In addition, while the proposed creating method is particularly advantageous in case of sparse input image sets, e.g. monocular (or more-generally single-view) images, the image set may comprise multi-view images when available.

As shown in Fig. 1, the input to the creating method is an image set 10, e.g. a video, e.g. a monocular video recording of a human head. Given a sequence of images $I = \{I_i\}$ (e.g. RGB images, e.g. monocular images) as input, the creating method aims to reconstruct a dynamic head avatar (controllable avatar) $O = \{O_i\}$ as output, which can be rendered into photo-realistic images from various viewpoints. To achieve high rendering quality with real-time performance, head avatars may be represented using 3D Gaussian Splatting [REF. 2]. However, other techniques such as Neural Radiance Fields [REF. 3] are also encompassed.

The controllable avatar may be initialized following [REF. 1], as summarized hereinafter, however the controllable avatar may be initialized in any other suitable way. To make the reconstructed avatar animatable with various head poses and expressions, the controllable avatar may be based on a parametric morphable head model, such as FLAME [REF. 4]. While the present embodiment is detailed with a controllable avatar relying on a parametric morphable model comprising a mesh having cells, in particular triangular cells (also referred to herein as triangles), the principles explained herein also apply to other shapes of cells (e.g. quadrangular, etc.), and more generally to other types of models.

Head tracking, e.g. monocular head tracking known *per se* in the art, may be carried out to obtain the FLAME

meshes $\mathcal{M} = \{\mathcal{M}_i\}$. Then, the FLAME meshes are associated to 3D Gaussians to create a controllable avatar, which can be driven to create novel head animations by changing FLAME poses and expression parameters. The controllable avatar $\mathcal{O}$ may then be optimized by the input view reconstruction loss $\mathcal{L}_{rec}$ between an input image $I_i$ and views $I_i^{rec}$ rendered from $\mathcal{O}_i$. In other words, the parameters of the controllable avatar are learnt based on a comparison between the image set 10 and a novel image rendered from the controllable avatar O.

However, it is an extremely under-constrained problem to reconstruct plausible head avatars that can be rendered into photo-realistic novel view and expression images from short monocular videos, given a few observations of a human head with limited viewpoints and expressions in the input.

To this end, the creating method comprises obtaining at least one subject image prior from a pre-trained image generation model 20, and learning the parameters of the controllable avatar based on said subject image prior. In other words, image priors of a pre-trained image generation model, which will be detailed later on, are distilled to provide effective constraint for novel view rendering $I_i^{view}$ from $\mathcal{O}_i$ for Gaussian Splats optimization. As shown in Fig. 1, the image generation model may be used as an image refiner to enhance images $I_i^{view}$ rendered from the controllable avatar, thus producing photo-realistic pseudo-ground-truths $\hat{I}_i^{view}$ for $I_i$. The controllable avatar $\mathcal{O}$ may then be optimized by the novel view loss $\mathcal{L}_{view}$ between the subject image priors $\hat{I}_i^{view}$, used as pseudo-ground-truths, and the novel images $I_i^{view}$ rendered from $\mathcal{O}_i$.

As mentioned above, the image generation model may comprise a diffusion model and/or a text-to-image model. In an embodiment, the image generation model comprises a text-to-image diffusion model, which takes an image as an input, adds noise to that input and denoises the noise image considering a text prompt in order to output a modified image.

As an example, the animatable Gaussian splatting may be constructed following [REF. 1] and [REF. 2], as briefly summarized hereafter according to an example.

[REF. 2] parameterizes a scene using a set of discrete geometric primitives known as 3D Gaussian splats. Each splat is characterized by a covariance matrix $\Sigma$ centered at location $\mu$. The covariance matrices are required to be semi-definite for physical interpretations. [REF. 1] utilized a parametric ellipsoid definition to construct the covariance matrix $\Sigma = RSS^T R^T$ using a scaling matrix S and a rotation matrix R. These matrices are independently optimized and represented by a scaling vector $s \in \mathbb{R}^3$ and a quaternion $q \in \mathbb{R}^4$. $r \in \mathbb{R}^{3 \times 3}$ denotes the corresponding rotation matrix of $q$. To represent scene appearance, sphere harmonic coefficients are used to represent the color c of each Gaussian.

During rendering, a tile-based rasterizer is used to $\alpha$-blend all 3D Gaussians overlapping the pixel within a tile. To respect visibility order and avoid per-pixel sorting expenses, splats are sorted based on depth values within each tile before blending.

To enable Gaussian splats to be animatable for head avatars, the principles of [REF. 1] are followed to rig 3D Gaussians using FLAME mesh. Initially, each triangle of the FLAME identity mesh is bound with a 3D Gaussian and the 3D Gaussian is transformed based on triangle deformations across different time steps. The splat remains static in the local space of the attached triangle but can dynamically evolve in the global metric space along rotation, translation, and scaling transformations of the binding triangle.

For each triangle, the method computes the mean position T of its three vertices coordinates as the origin of the local space. The method defines a rotation matrix R to depict the orientation of the triangle in the global space, composed of three column vectors derived from the direction vector of one edge, the normal vector of the triangle face, and their cross product. Additionally, triangle scaling k is determined by calculating the mean length of one edge and its perpendicular in a triangle. The 3D Gaussian Splat is parameterized by the location $\mu$, rotation r, and anisotropic scaling s in the local space of its parent triangle. In the initialization stage, the location $\mu$ may be set as zero, rotation r as an identity matrix, and scaling s as a unit vector. During rendering, these properties are transformed from local to global space by:

$$r' = Rr, \qquad\qquad (1)$$

$$\mu' = kR\mu + T, \qquad\qquad (2)$$

$$s' = ks. \tag{3}$$

To capture fine-grained details, it is advantageous to have a sufficient number of Gaussians for rendering. Therefore, an adaptive density control strategy, that dynamically adds splats based on screen-space positional gradients, may be adopted. This densification step occurs in the local space, with newly added splats inheriting the binding relation from the original ones. This process allows for the creation of new Gaussians for each triangle, enhancing the model's capacity to represent its local region.

Optionally, to prevent identity drift in the subject image priors, the creating method may comprise fine-tuning the image generation model 20 to personalize it for the animated subject, before obtaining the subject image prior. In other words, the pre-trained priors are customized to the reconstructed identity, e.g. through an innovative fine-tuning strategy that only uses the provided input images (i.e. the image set 10).

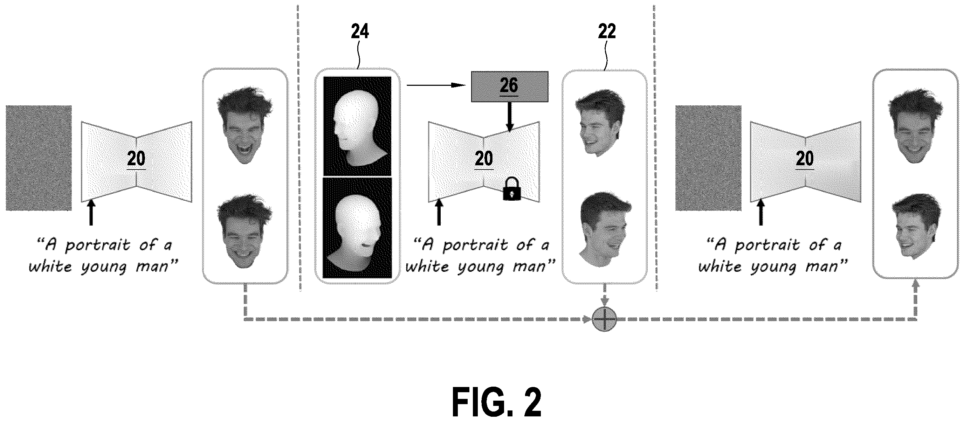

An example of a two-stage personalization strategy is illustrated in Fig. 2, however each stage may be carried out independently. In a first step, shown on the lefthand portion of Fig. 2, the fine-tuning comprises fine-tuning the image generation model 20 on the image set 10. Concretely, the pre-trained text-to-image diffusion model may be fine-tuned using the input image set 10, e.g. based on fine-tuning methods such as Dreambooth [REF. 6]. As shown in Fig. 2, the fine-tuning may use a text prompt to condition the denoising performed by the image generation model 20. The text prompt may be manually entered to describe the subject identity to learn (e.g. "a portrait of a white young man") or may be automatically generated, e.g. through recognition algorithms run on the image set 10 or other computer vision techniques.

In a second step, which may take place after the first step, the fine-tuning comprises generating augmented data by the image generation model and fine-tuning the image generation model 20 on the augmented data. As shown in the central portion of Fig. 2, the augmented data may comprise at least one set of images 22, e.g. multi-view images, namely images showing a reconstruction of the animated subject under a plurality of viewpoints.

Such augmented data may be generated by conditioning the image generation model 20 based on three-dimensional information of the animated subject. The three-dimensional information may comprise a depth map 24, although other variants are encompassed as previously mentioned. The depth map 24 may be obtained from the controllable avatar, hence indirectly from the input image set 10. However, in variants, the 3D information may be obtained directly from the image set 10. The 3D information may be provided to a conditioning model 26 such as ControlNet [REF. 7], configured to provide additional conditioning to the image generation model 20 based on the 3D information. Note that, for generating the augmented data, the parameters of the image generation model 20 may temporarily be frozen.

The generated augmented data may be used as such and/or, as illustrated in Fig. 2, combined with the input image set 10 to create a view-augmented dataset. Then, as illustrated in the right-hand portion of Fig. 2, the pre-trained image generation model 20 may be further fine-tuned using the augmented dataset. This process enables to obtain personalized subject image priors that effectively model the distribution of multi-view images for the reconstructed identity, thus alleviating the view bias issue and enhancing the personalized image generation model's ability to generate multi-view images.

With reference back to Fig. 1, the subject image priors, either personalized or not, can be used for animatable Gaussian reconstruction, e.g. using Score Distillation Sampling (SDS) loss [REF. 8]. If x denotes a rendered image from the controllable avatar (e.g. a novel image), one can add noise $\varepsilon$ at time step $t$ to the input image $x$ to obtain a noisy image $x_t$, which is fed into denoising network (e.g. the image generation model 20) to estimate out the noise $\hat{\varepsilon}$. The SDS loss calculates the difference $\|\hat{\epsilon} - \epsilon\|_2^2$. The gradients can be back-propagated to update 3D representation, namely the controllable avatar. The SDS loss as described in [REF. 8] essentially performs one-step denoising. Due to the stochastic nature of the denoising process introduced by random noise levels and seeds, it could contain noisy gradients that disturb 3D optimization. Consequently, it often causes over-saturated appearance issues in synthesized novel views. The inventors found that after iteratively denoising $x_t$ for multiple steps, it is possible to obtain a deterministic output $x_0$ that is more photorealistic than x. Based on this observation, the diffusion loss may be calculated as $\|x_0 - x\|_2^2$ for learning the parameters of the controllable avatar.

The subject image prior may be generated as follows: at each learning iteration, a random frame i from the image set 10 and a random viewpoint $\phi$ may be sampled, then a random novel image $I_i^{view} = \mathcal{R}(\mathcal{O}_i, \phi)$ may be generated from the controllable avatar. Personalized diffusion priors with depth guidance may be employed to regularize the distribution $I_i^{view}$. Concretely, as shown in Fig. 1, the rendered novel image $I_i^{view}$ is encoded into a latent feature $z$, which is perturbed with noise $\varepsilon_t$ to obtain noisy feature $z_t$. The noise intensity of $\varepsilon_t$ is controlled by the diffusion time step $t \sim [t_{min}, t_{max}]$. Then multiple denoising steps of latent diffusion are iteratively performed until the final clean latent $z_0$ is obtained.

To accelerate the generation speed, the DDIM sampling strategy [REF. 9] may be adopted by running $\lfloor t/k \rfloor$ (integer division of $t$ by $k$) intermediate steps which can reduce the denoising steps by $k$ times.

To promote expressions of generated facial images that are consistent with input views, the novel image may be generated by conditioning the image generation model 20 based on three-dimensional information 30 of the animated subject, optionally wherein the three-dimensional information 30 is obtained from the at least one image set. Concretely, for instance, a depth map $D_i = \mathcal{R}(\mathcal{M}_i, \phi)$ rendered from FLAME tracking mesh $\mathcal{M}_i$ may be used as the conditional guidance for the latent diffusion.

Then $z_0$ is decoded, i.e. interpreted to a subject prior image $x_0$ that can serve as pseudo ground truth $\hat{I}_i^{view}$.

The novel image $I_i^{view}$ or its enhanced version $\hat{I}_i^{view}$ may show a novel view of the animated subject having the same expression as in an image of the image set 10.

Alternatively or in addition, to increase animatability across poses and expressions, the novel image or its enhanced version may show a novel expression of the animated subject as compared to the image set 10. For instance, such a novel image may be obtained by randomly sample FLAME poses and expression parameters from a physically meaningful space to animate Gaussian splats, creating one or more novel expression renderings $I^{expr}$. Similarly, corresponding pseudo ground-truth $\hat{I}^{expr}$ can also be produced in the same way as the $\hat{I}_i^{view}$ is obtained from $I_i^{view}$. More generally, although $I^{expr}$ and $\hat{I}^{expr}$ are not illustrated in Fig. 1, they can be obtained and used in the same way as $I_i^{view}$ and $\hat{I}_i^{view}$ respectively, mutatis mutandis. As a consequence, the subject image priors may contain one or more $\hat{I}_i^{view}$ and/or one or more $\hat{I}^{expr}$.

As mentioned above, optionally, the subject image prior is updated during the learning: since the 2D diffusion model lacks 3D awareness, the initially produced image subject priors $\hat{I}^{view}$ and $\hat{I}^{expr}$ are realistic but not 3D consistent. Therefore, $\hat{I}^{view}$ and $\hat{I}^{expr}$ may be calculated in an online manner, dynamically evolving them along with the optimization of the controllable avatar. This iterative process updates $\hat{I}^{view}$ and $\hat{I}^{expr}$, leading to more photorealistic renderings $I^{view}$ and $I^{expr}$ from the controllable avatar $\mathcal{O}$. The image information is then fused into the controllable avatar $\mathcal{O}$.

In a subsequent iteration, the updated controllable avatar $\mathcal{O}$ may provide multi-view consistent images as initial inputs to perform image denoising, promoting the view-consistent generation of $\hat{I}^{view}$.

The learning of the parameters of the controllable avatar *per se* may be supervised by a loss function combining one or more differences in input view, novel view, novel expression, scale regularization, and translation regularization. For instance, the following loss function may be used:

$$\mathcal{L} = \mathcal{L}_{img}(I^{rec}, I) + \lambda_{view}\mathcal{L}_{img}(I^{view}, \hat{I}^{view}) + \lambda_{expr}\mathcal{L}_{img}(I^{expr}, \hat{I}^{expr}) + \lambda_{pos}\mathcal{L}_{pos} + \lambda_{scale}\mathcal{L}_{scale} \tag{4}$$

where $L_{img}$ may be defined by a combination of pixel-wise $L_1$ loss and structural similarity (SSIM) loss:

$$\mathcal{L}_{img} = (1 - \lambda)\mathcal{L}_1 + \lambda\mathcal{L}_{D-SSIM} \tag{5}$$

where $\lambda = 0.2$, for instance.

The position regularization term $\mathcal{L}_{pos}$ ensures that Gaussians remain close to their attached triangles during optimization. It regularizes the local position of each Gaussian via:

$$\mathcal{L}_{pos} = \|max(\mu, \epsilon_{pos})\|_2$$

where $\epsilon_{pos} = 1$, for instance, serves as a threshold, allowing small positional errors within the scaling of the attached triangle.

The scale regularization term mitigates the formation of large Gaussians, which could lead to jittering problems due to small rotations of triangles. We regularize the local scale of each Gaussian by:

$$\mathcal{L}_{scale} = \|max(s, \epsilon_{scale})\|_2$$

This term will be disabled when the scale of the Gaussian is less than e.g. $\varepsilon_{scale}$ = 0.6 times the scale of the attached triangle.

In Eq. (4), $\mathcal{L}_{img}$ ($I^{rec}$, $I$), corresponding to the aforementioned $\mathcal{L}_{rec}$, as well as the splat position $\mathcal{L}_{pos}$ and scale regularization $\mathcal{L}_{scale}$ terms, follow [REF. 1] and ensure learning of the controllable avatar based on the image set 10. In contrast, $\mathcal{L}_{view} = \mathcal{L}_{img}$ ($I^{view}$, $\hat{I}^{view}$) and $\mathcal{L}_{expr} = \mathcal{L}_{img}$ ($I^{expr}$, $\hat{I}^{expr}$) ensure learning of the controllable avatar based on the subject image priors.

Implementation details according to an example are discussed below. The image generation model 20 may comprise Stable Diffusion [REF. 10]. As mentioned above, ControlNet [REF. 7] may be used to inject 3D information for expression and view control. The guidance and conditioning scales may be 7.5 and 1.0 respectively.

The FLAME meshes may be initially obtained by MICA tracker [REF. 11] from monocular videos. The animatable Gaussians may be optimized (i.e. the parameters of the controllable avatar may be learned) with Adam [REF. 12] for e.g. 30,000 iterations, with learning rates of 5e-5, 1.7e-2, 1e-3, 2.5e-3, and 5e-2 for splat position, scaling factor, rotation quaternion, color and opacity respectively. Adaptive densification is performed if the position gradients are larger than 0.0002 in every 1,000 iterations until 20,000 iterations are reached. Gaussians with opacity less than 0.005 are also removed. During training, the FLAME parameters may also be finetuned using the learning rates 1e-6, 1e-5, and 1e-3 for translation, joint rotation, and expression coefficients respectively.

Novel viewpoints are randomly sampled to achieve a 360-degree capture for a head avatar. The azimuth range is [-180°, 180°], the elevation range is [-45°, 45°], and the distance between the camera and the head avatar location is between 1.0 and 1.5 units. To make the sampled novel expression physically meaningful, the pose and expression parameter range may be obtained from a training dataset, and then sampled between the calculated range.

The novel images and/or image subject priors may be rendered in a resolution of 768x768. In Equation (4), $\lambda_{view}$, $\lambda_{expr}$, $\lambda_{pos}$ and $\lambda_{scale}$ may be set to 1, 0.2, 0.01 and 1 respectively.

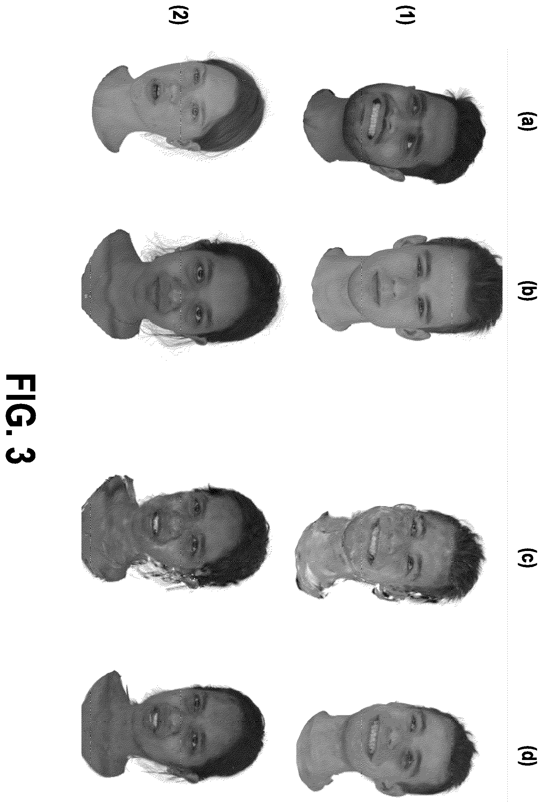

Experiments have been conducted on video recordings from the NerSemble dataset [REF. 13], wherein a single-view video was used as the input (i.e. the image set 10). Fig. 3 illustrates qualitative results on the cross-identity reenactment task, consisting in driving a reconstructed avatar with unseen head poses and expressions from a motion sequence of a different identity. Specifically, column (a) shows the driving frame determining the expression and viewpoint to reenact; column (b) shows the source identity from which the controllable avatar is reconstructed; column (c) shows the output of Gaussian Avatars [REF. 1] for that task and column (d) shows the output of the proposed creating method. As can be seen for two examples in rows (1) and (2), the proposed method (d) outperforms Gaussian Avatars (c) by showcasing more vivid expressions and more plausible renderings, especially for areas that are invisible in the source identity image.

Besides, an ablation study conducted by the inventors showed that:

- the proposed creating method outperforms prior art method even without personalization of the image generation model, although personalization is helpful to avoid the avatar deviating from the original identity;
- two-stage personalization as proposed performs better than one-stage personalization on the sole basis of the input images, without augmented data;
- explicitly using the subject image priors for learning parameters of the controllable avatar, even more so when enhanced as described above, e.g. with a diffusion loss, enables to effectively mitigate the oversaturation issues that are commonly encountered with standard Score Distillation Sampling loss;
- conditioning the personalization and/or the subject image prior generation with 3D information, e.g. depth information, enables to avoid floater artifacts. As compared to landmark guidance, a depth map produces more realistic images around the mouth and the back head regions.

In addition, the proposed method has proven to be very robust: when tested upon varying the number of input images, the creating method exhibits no significant performance drop in quantitative results, even when provided with as few as 8 frames. The proposed creating method thus pushes the frontier of avatar fidelity even when generated from commodity devices.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A computer-implemented method for creating a controllable avatar of an animated subject from at least one image set (10) of the animated subject, the method comprising:

   - initializing the controllable avatar;
   - obtaining at least one subject image prior ($\hat{I}^{view}$) from a pre-trained image generation model (20);
   - learning parameters of the controllable avatar based on the at least one image set (10) and the at least one subject image prior ($\hat{I}^{view}$).

2. The method of claim 1, further comprising, prior to obtaining the at least one subject image prior, fine-tuning the image generation model (20) to personalize it for the animated subject.

3. The method of claim 2, wherein the fine-tuning comprises fine-tuning the image generation model (20) on the at least one image set (10).

4. The method of claim 2 or 3, wherein the fine-tuning comprises generating augmented data by the image generation model (20) and fine-tuning the image generation model (20) on the augmented data.

5. The method of claim 4, wherein the augmented data are generated by conditioning the image generation model (20) based on three-dimensional information of the animated subject, optionally wherein the three-dimensional information is obtained from the at least one image set (10).

6. The method of claim 4 or 5, wherein the augmented data comprise at least one set of images (22), each set of images showing a reconstruction of the animated subject under a plurality of viewpoints.

7. The method of any one of claims 1 to 6, wherein the at least one subject image prior ($\hat{I}^{view}$) is used as pseudo-ground-truth for the learning.

8. The method of any one of claims 1 to 7, wherein obtaining at least one subject image prior ($\hat{I}^{view}$) comprises rendering at least one novel image from the controllable avatar and enhancing the at least one novel image by the image generation model (20).

9. The method of claim 8, wherein the at least one novel image shows at least one of a novel view ($I^{view}$) of the animated subject having the same expression as in an image of the at least one image set (10), and a novel expression of the animated subject as compared to the at least one image set (10).

10. The method of claim 8 or claim 9, wherein the at least one novel image is generated by conditioning the image generation model (20) based on three-dimensional information of the animated subject, optionally wherein the three-dimensional information is obtained from the at least one image set (10).

11. The method of any one of claims 1 to 10, wherein the at least one subject image prior ($\hat{I}^{view}$) is updated during the learning.

12. The method of any one of claims 1 to 11, wherein the image generation model (20) comprises a diffusion model and/or a text-to-image model.

13. The method of any one of claims 1 to 12, wherein the at least one image set (10) is a monocular image set, optionally sampled from a monocular video.

14. A device for creating a controllable avatar of an animated subject from at least one image set (10) of the animated subject, the device being configured to:

   - initialize the controllable avatar;
   - obtain at least one subject image prior ($\hat{I}^{view}$) from a pre-trained image generation model (20);

- learn parameters of the controllable avatar based on the at least one image set (10) and the at least one subject image prior ($\hat{I}^{view}$).

15. A computer program set including instructions for executing the steps of the method of any one of claims 1 to 13 when said program set is executed by at least one computer.

16. A recording medium readable by at least one computer and having recorded thereon at least one computer program including instructions for executing the steps of the method of any one of claims 1 to 13.

**Amended claims in accordance with Rule 137(2) EPC.**

1. A computer-implemented method for creating a controllable avatar of an animated subject from at least one image set (10) of the animated subject, the method comprising initializing the controllable avatar and being **characterized by** further comprising:

   - obtaining at least one subject image prior ($\hat{I}^{view}$) from a pre-trained image generation model (20);
   - learning parameters of the controllable avatar based on the at least one image set (10) and the at least one subject image prior ($\hat{I}^{view}$).

2. The method of claim 1, further comprising, prior to obtaining the at least one subject image prior, fine-tuning the image generation model (20) to personalize it for the animated subject.

3. The method of claim 2, wherein the fine-tuning comprises fine-tuning the image generation model (20) on the at least one image set (10).

4. The method of claim 2 or 3, wherein the fine-tuning comprises generating augmented data by the image generation model (20) and fine-tuning the image generation model (20) on the augmented data.

5. The method of claim 4, wherein the augmented data are generated by conditioning the image generation model (20) based on three-dimensional information of the animated subject, optionally wherein the three-dimensional information is obtained from the at least one image set (10).

6. The method of claim 4 or 5, wherein the augmented data comprise at least one set of images (22), each set of images showing a reconstruction of the animated subject under a plurality of viewpoints.

7. The method of any one of claims 1 to 6, wherein the at least one subject image prior ($\hat{I}^{view}$) is used as pseudo-ground-truth for the learning.

8. The method of any one of claims 1 to 7, wherein obtaining at least one subject image prior ($\hat{I}^{view}$) comprises rendering at least one novel image from the controllable avatar and enhancing the at least one novel image by the image generation model (20).

9. The method of claim 8, wherein the at least one novel image shows at least one of a novel view ($\hat{I}^{view}$) of the animated subject having the same expression as in an image of the at least one image set (10), and a novel expression of the animated subject as compared to the at least one image set (10).

10. The method of claim 8 or claim 9, wherein the at least one novel image is generated by conditioning the image generation model (20) based on three-dimensional information of the animated subject, optionally wherein the three-dimensional information is obtained from the at least one image set (10).

11. The method of any one of claims 1 to 10, wherein the at least one subject image prior ($\hat{I}^{view}$) is updated during the learning.

12. The method of any one of claims 1 to 11, wherein the image generation model (20) comprises a diffusion model and/or a text-to-image model.

13. The method of any one of claims 1 to 12, wherein the at least one image set (10) is a monocular image set, optionally sampled from a monocular video.

14. A device for creating a controllable avatar of an animated subject from at least one image set (10) of the animated subject, the device being configured to:

   - initialize the controllable avatar;
   - obtain at least one subject image prior ($\hat{I}^{view}$) from a pre-trained image generation model (20);
   - learn parameters of the controllable avatar based on the at least one image set (10) and the at least one subject image prior ($\hat{I}^{view}$).

15. A computer program set including instructions for executing the steps of the method of any one of claims 1 to 13 when said program set is executed by at least one computer.

16. A recording medium readable by at least one computer and having recorded thereon at least one computer program including instructions for executing the steps of the method of any one of claims 1 to 13.

**FIG. 1**

EP 4 664 406 A1

**FIG. 2**

15

FIG. 3

**EUROPEAN SEARCH REPORT**

Application Number

EP 24 18 2389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUFENG ZHENG ET AL: "I M Avatar: Implicit Morphable Head Avatars from Videos", ARXIV.ORG, CORNELL UNIVERSITY LIBRARY, 201 OLIN LIBRARY CORNELL UNIVERSITY ITHACA, NY 14853, 14 December 2021 (2021-12-14), XP091173143, * Abstract, figures 1,2, sections 3,4 and subsections * | 1-16 | INV. G06T13/40 |
| A | US 2015/213646 A1 (MA KAI [US] ET AL) 30 July 2015 (2015-07-30) * the whole document * | 1-16 | |
| A | US 2004/175039 A1 (MILLER MICHAEL [US]) 9 September 2004 (2004-09-09) * the whole document * | 1-16 | |

**TECHNICAL FIELDS SEARCHED (IPC)**

G06T

The present search report has been drawn up for all claims

| Place of search | Date of completion of the search | Examiner |
|---|---|---|
| Berlin | 20 January 2025 | Almeida Garcia, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 2389

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2025

| Patent document cited in search report | Publication date | Patent family member(s) | Publication date |
|---|---|---|---|
| US 2015213646 A1 | 30-07-2015 | CN 106164978 A | 23-11-2016 |
| | | EP 3100236 A1 | 07-12-2016 |
| | | KR 20160115959 A | 06-10-2016 |
| | | US 2015213646 A1 | 30-07-2015 |
| | | WO 2015116563 A1 | 06-08-2015 |
| US 2004175039 A1 | 09-09-2004 | EP 1599828 A1 | 30-11-2005 |
| | | EP 1599829 A1 | 30-11-2005 |
| | | EP 1599830 A1 | 30-11-2005 |
| | | JP 2006520054 A | 31-08-2006 |
| | | JP 2006520055 A | 31-08-2006 |
| | | JP 2006522411 A | 28-09-2006 |
| | | US 2004175039 A1 | 09-09-2004 |
| | | US 2004175041 A1 | 09-09-2004 |
| | | US 2004190775 A1 | 30-09-2004 |
| | | US 2010295854 A1 | 25-11-2010 |
| | | WO 2004081853 A1 | 23-09-2004 |
| | | WO 2004081854 A1 | 23-09-2004 |
| | | WO 2004081855 A1 | 23-09-2004 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHENHAN QIAN** ; **TOBIAS KIRSCHSTEIN** ; **LIAM SCHONEVELD** ; **DAVIDE DAVOLI** ; **SIMON GIE-BENHAIN** ; **MATTHIAS NIEßNER**. GaussianAva-tars: Photorealistic head avatars with rigged 3D gaussians. *arXiv:2312.02069*, 2023
- **BERNHARD KERBL** ; **GEORGIOS KOPANAS** ; **THOMAS LEIMKÜHLER** ; **GEORGE DRETTAKIS**. 3D Gaussian splatting for real-time radiance field rendering. *ACM Transactions on Graphics (ToG)*, 2023, vol. 42 (4), 1-14
- **BEN MILDENHALL** ; **PRATUL P SRINIVASAN** ; **MATTHEW TANCIK** ; **JONATHAN T BARRON** ; **RAVI RAMAMOORTHI** ; **REN NG**. NeRF: Repre-senting scenes as neural radiance fields for view synthesis.. *Communications of the ACM*, 2021, vol. 65 (1), 99-106
- **TIANYE LI** ; **TIMO BOLKART** ; **MICHAEL. J. BLACK** ; **HAO LI** ; **JAVIER ROMERO**. Learning a model of facial shape and expression from 4D scans. *ACM Transactions on Graphics, (Proc. SIGGRAPH Asia)*, 2017, vol. 36 (6), 194
- **JUSTUS THIES** ; **MICHAEL ZOLLHOFER** ; **MARC STAMMINGER** ; **CHRISTIAN THEOBALT** ; **MAT-THIAS NIEßNER**. Face2face: Real-time face capture and reenactment of rgb videos. *Proceedings of the IEEE conference on computer vision and pattern recognition*, 2016, 2387-2395
- **NATANIEL RUIZ** ; **YUANZHEN LI** ; **VARUN JAM-PANI** ; **YAEL PRITCH** ; **MICHAEL RUBINSTEIN** ; **KFIR ABERMAN**. Dreambooth: Fine tuning text-to-image diffusion models for subject-driven generation. *Proceedings of the IEEE/CVF Conference on Computer Vision and Pattern Recognition*, 2023, 22500-22510
- **LVMIN ZHANG** ; **ANYI RAO** ; **MANEESH AGRA-WALA**. Adding conditional control to text-to-image diffusion models. *Proceedings of the IEEE/CVF International Conference on Computer Vision*, 2023, 3836-3847
- **BEN POOLE** ; **AJAY JAIN** ; **JONATHAN T BAR-RON** ; **BEN MILDENHALL**. Dreamfusion: Text-to-3d using 2d diffusion. *arXiv:2209.14988*, 2022
- **JIAMING SONG** ; **CHENLIN MENG** ; **STEFANO ERMON**. Denoising diffusion implicit models. *ar-Xiv:2010.02502*, 2020
- **ROBIN ROMBACH** ; **ANDREAS BLATTMANN** ; **DOMINIK LORENZ** ; **PATRICK ESSER** ; **BJÖRN OMMER**. High-Resolution Image Synthesis with Latent Diffusion Models. *arXiv:2112.10752*, 2021
- Towards metrical reconstruction of human faces. **WOJCIECH ZIELONKA** ; **TIMO BOLKART** ; **JUS-TUS THIES**. European Conference on Computer Vision. Springer, 2022, 250-269
- **DIEDERIK P KINGMA** ; **JIMMY BA. ADAM**. A method for stochastic optimization. *arXiv: 1412.6980*, 2014
- **TOBIAS KIRSCHSTEIN** ; **SHENHAN QIAN** ; **SIMON GIEBENHAIN** ; **TIMWALTER** ; **MATTHIAS NI-EßNER**. Nersemble: Multi-view radiance field reconstruction of human heads. *ACM Transactions on Graphics (TOG)*, 2023, vol. 42 (4), 1-14